# EUROPEAN PATENT SPECIFICATION

(11) **EP 3 504 146 B1**
(45) Date of publication and mention of the grant of the patent: **07.08.2024**
(21) Application number: 17844040.0
(22) Date of filing: 28.08.2017
(51) Int. Cl.: E02F 3/36, B66C 3/00, B66C 13/08

(54) **ROTATOR ARRANGEMENT**
ROTATORANORDNUNG
AGENCEMENT DE ROTATEUR

(30) Priority: 26.08.2016 SE 1651154
(43) Date of publication of application: 03.07.2019
(73) Proprietor: Indexator Rotator Systems AB, 922 21 Vindeln (SE)
(72) Inventor: HARR, Joakim, 922 32 Vindeln (SE)
(74) Representative: Ehrner & Delmar Patentbyrå AB
(86) International application number: PCT/SE2017/050861
(87) International publication number: WO 2018/038676

(56) References cited:
- EP-A1- 2 460 758
- EP-A1- 2 568 259
- WO-A1-2012/067559
- WO-A1-2012/134370
- WO-A1-2016/099372
- DE-A1- 3 113 263
- DE-A1- 3 132 489
- US-A- 5 267 504
- US-A1- 2005 017 528
- US-A1- 2005 017 528
- US-B1- 6 435 235

## Description

### TECHNICAL FIELD

The invention relates to a rotator arrangement for providing a rotating movement to a hydraulic tool attached to said rotator arrangement.

### BACKGROUND

Rotator arrangements are widely used in foresting, harvesting or the like where a carrier, truck, tractor or the like carries an arrangement for handling excavators, timber tools, harvest tools or the like. Often such arrangements are hydraulically driven and include a crane arm, wherein the rotator arrangement is arranged to the free end of the crane arm. The rotator arrangement typically includes a motor, i.e. a hydraulic motor, to provide the rotational movement.

A challenge related to such rotator arrangements is that the rotators are exposed to heavy forces both radially and axially. Conventionally, this has been solved by dimensioning the rotator arrangement and specifically the motor with components adapted to withstand very high efforts. A problem is that that the motor, and specifically the fit between the stator and rotor needs to be very accurate and precise, which is difficult to achieve in combination with the high demands concerning the mechanical strength.

In DE 31 32 489 A1 a conventional hydraulic motor is described, in which conduits for hydraulic fluid passes through a centre portion of a rotor of the hydraulic motor. The hydraulic motor includes a swivel for providing swivelled hydraulic fluid to hydraulic tool attached to the hydraulic motor. This arrangement does not solve the problems related to the required precision between the stator and the rotor.

In WO 2012/134370 a rotator arrangement is described in which the forces are arranged to be taken up in an arrangement arranged to leave the interaction between the rotor and stator separated from the load distribution other than the torque provided by the motor. The arrangement is advantageous, but it is also relatively heavy and space demanding, especially in the radial direction.

Therefore, there is a need of a rotator arrangement that is lighter and more compact especially radially than an ordinary arrangement, but that is capable of withstanding high efforts, without compromising the accuracy and durability of the arrangement.

### SUMMARY OF THE INVENTION

It is an object of the present invention to provide a rotator arrangement for providing a rotational movement, which is compact and which is arranged to provide the rotational movement without undue stress between the stator and rotor. A further object is to provide for a tangle free cable and hose arrangement.

The invention relates to a rotator arrangement for providing a rotating movement between a crane arm or the like and a hydraulic tool, the rotator arrangement comprising: a first attachment piece arranged to be attached to the crane arm or the like, a second attachment piece arranged to be attached to the hydraulic tool, a casing joining the first attachment piece to the second attachment piece, which casing is arranged to carry the loads of the hydraulic tool and includes a bearing or the like allowing a first part of the casing to rotate with respect to a second part of the casing, and a hydraulic rotation motor arranged to provide a rotational movement between the first and second attachment pieces around an axial axis, the motor comprising a stator and a rotor, the rotor being arranged inside the stator so as to rotate with respect to the stator around the same axial axis as the first and second attachment pieces. Further, hydraulic couplings for connection to hydraulic hoses arriving from the crane arm or the like to provide the hydraulic tool with hydraulic fluid, are arranged facing the first attachment piece and substantially parallel to the axial axis through the rotor of the motor, the rotor being arranged at least partly inside said casing, wherein the motor is hollow allowing hydraulic hoses to pass through the interior of both the rotor and stator along the direction of the axial axis.

With said arrangement hoses and cables may be arranged centrally such that they will not limit rotation of the rotator. Further, this is achieved in a slim construction in which the precision between the rotor and stator of is not compromised by heavy loads acting on the rotator. In another alternative, the swivel is not a part of the rotator, but is arranged as a separate part, connected to the rotator. Further, the fact that the motor is hollow allowing the conduits to be arranged at least partly inside it makes sure that the connections are shielded.

According to a specific embodiment of the invention a swivel connector is arranged via which the hydraulic fluid to the hydraulic tool is arranged to be provided, the hydraulic couplings being provided to a central portion of the swivel connector. The swivel connector makes sure that the hydraulic hoses for the hydraulic tool will not hinder the rotation of the rotator.

According to another specific embodiment of the invention the motor is hollow allowing hydraulic hoses to pass through the interior of both the rotor and stator along the direction of the axial axis, the hydraulic couplings being provided on a central portion of the swivel connector.

According to yet a specific embodiment of the invention the central portion of the swivel connector is arranged to rotate with the rotor, which is arranged inside the stator and a swivel house of the swivel connector is arranged to house the central portion of the swivel connector and is rotationally connected to the stator.

In one specific embodiment hydraulic couplings to provide the hydraulic motor with hydraulic fluid are arranged facing the first attachment piece and substantially parallel to the axis of rotation via or through the rotor of the motor.

In an alternative embodiment the hydraulic couplings to provide the hydraulic motor with hydraulic fluid are arranged separated from the hydraulic couplings to provide the hydraulic tool with hydraulic fluid, at a distance from and/or off-set from the axis of rotation of the rotor. In this embodiment the hydraulic fluid is preferably fed directly to the motor without the need of swiveling the supplied hydraulic fluid, i.e. said hydraulic couplings lead directly to the motor and not via a swivel connector.

In one specific embodiment the rotor and a central portion of the swivel connector are integrated and the hydraulic couplings to provide the hydraulic tool with hydraulic fluid are arranged are provided on an axial end of the integrated rotor and said central portion of the swivel connector facing the first attachment portion.

In another specific embodiment the torque transmission unit is arranged to transmit a rotational movement provided by the motor from the rotor to the first attachment piece.

Preferably, an angle meter is arranged to monitor the rotation of the first attachment piece with respect to the second attachment piece. The angle meter may be provided between any two parts that rotate with respect to each as a result of the rotation provided by the motor.

In a specific embodiment the torque transmission unit comprises an connective element arranged to slide in mating radial track extending in a radial direction orthogonal to the axial axis, so as to provide a connection between the motor and one of the attachment pieces, which connection provides substantially no gap between the motor and said attachment piece in a direction of rotation around the axial axis, but includes a freedom to move in a radial direction orthogonal to the axial axis, and in an axial direction along the axial axis.

In another specific embodiment a torque transmission unit is arranged to transmit a rotational movement provided by the motor between the first and second attachment pieces, the torque transmission unit transmitting said rotational movement without transmitting substantial axial and radial loads, and wherein the torque transmission unit comprises a connective element arranged to slide in mating radial track extending in a radial direction orthogonal to the axial axis, so as to provide a connection between the motor and one of the attachment pieces, which connection provides substantially no gap between the motor and said attachment piece in a direction of rotation around the axial axis, but includes a freedom to move in a radial direction orthogonal to the axial axis, and in an axial direction along the axial axis. With this arrangement substantially no axial or radial forces are transmitted between the rotor and the stator.

In a specific embodiment the first set of engagement portions and the second set of engagement portions are arranged with a freedom of movement with respect to said rotor attachment piece in an axial direction along the axial axis
In yet a specific embodiment the rotator further comprises an electric connection arranged facing the first attachment piece and substantially parallel to the axis of rotation via or through the rotor of the motor, wherein an electric swivel is arranged to provide electric signals and/or power to the hydraulic tool.

In yet a specific embodiment the rotator further comprises an electric connection arranged facing the first attachment the rotator further comprises a coupling for urea connection arranged facing the first attachment piece and substantially parallel to the axis of rotation via or through the rotor of the motor, wherein a swivel is arranged to provide urea to the hydraulic tool.

Other embodiments and advantages of the invention will be apparent from the following detailed description.

### SHORT DESCRIPTION OF THE DRAWINGS

Below the invention will be described in detail with reference to the accompanying drawings, of which:
- **Fig. 1**: is a perspective view of a rotator arrangement in accordance with a first embodiment of the invention;
- **Fig. 2**: is an exploded view of the rotator attachment piece, torque transmission unit and rotor of a rotator arrangement in accordance with the first embodiment;
- **Fig. 3**: is a sectional view of the rotator arrangement in accordance with the first embodiment;
- **Fig. 4**: is a sectional view of a rotator arrangement in accordance with a second embodiment of the invention;
- **Fig. 5**: is a sectional view of a rotator arrangement in accordance with a third embodiment of the invention;
- **Fig. 6**: is an exploded view of a specific embodiment of a torque transmission unit between a rotor and an attachment piece; and
- **Fig. 7**: is an exploded view of the torque transmission unit in fig. 6 seen from the opposite side.

### DETAILED DESCRIPTION OF THE SHOWN EMBODIMENT

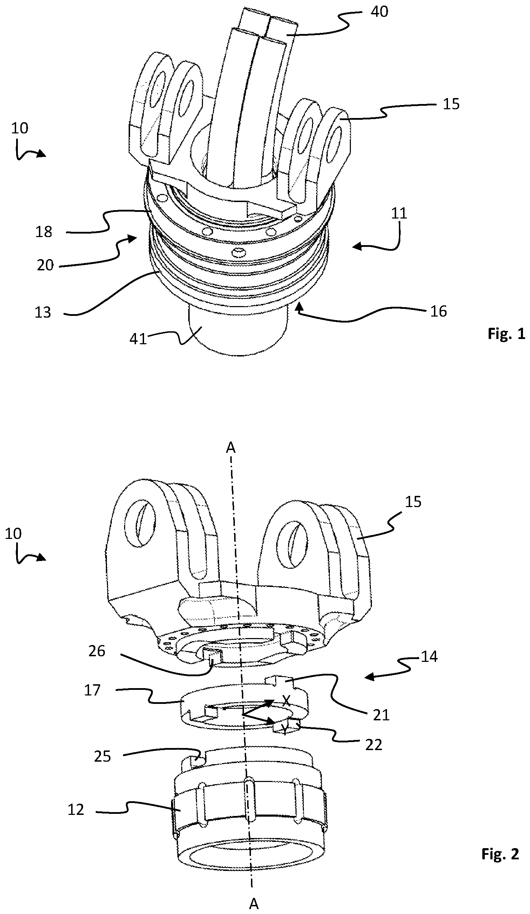

In figure 1 a first embodiment of a rotator arrangement 10 in accordance with the invention is shown. The rotator arrangement 10 is arranged for providing a rotating movement between a crane arm and a hydraulic tool, such as grip arm, shovel, harvester or the like. The rotator arrangement comprises a first attachment piece 15 arranged to be attached to the crane arm or the like, and a second attachment piece 16 arranged to be attached to the hydraulic tool. A casing 20 is arranged and joins the first attachment piece 15 to the second attachment piece 16. The casing 20 is arranged to carry the loads of the hydraulic tool and includes a bearing 18 or the like for allowing a first part of the casing to rotate with respect to a second part of the casing. A swivel 41 for swiveling hydraulic fluid to the hydraulic tool is arranged in connection to the motor 11. The second attachment piece 16 is arranged between said motor 11 and the swivel connector 41. The swivel connector 41 is hence arranged to be housed within the hydraulic tool (not shown).

The motor 11 is arranged to provide a rotational movement between the first and the second attachment pieces 15,16 around an axis of rotation A. The motor comprises a stator 13 and a rotor 12, the rotor 12 being arranged inside the stator so as to rotate with respect to the stator 13 around the same axis of rotation A as the first and second attachment pieces. Hydraulic couplings 31 arranged to connect to hydraulic hoses 40 to provide the hydraulic tool with hydraulic fluid are arranged facing the first attachment piece 15 and substantially parallel to the axis of rotation A. In accordance with the invention the hydraulic hoses are arranged to or at least partly through the rotor 12 of the motor 11. In the first embodiment shown in figures 1-3 the hydraulic hoses are arranged through the rotor 12 of the motor 11, the rotor 12 being hollow and arranged inside said casing 20. Further, in this first embodiment the casing 20 is comprised of the stator 13 and a bearing 18, resulting in a very slim construction. Further, a second set of hydraulic couplings 32, to provide the motor 11 with hydraulic fluid from hoses 44, is arranged.

An important aspect of the invention is that the rotor 12 carries no axial or radial load. This is achieved in that the casing 20 is arranged to carry axial and radial loads acting between the first and second attachment pieces 15,16. Further though, a torque transmission unit 14 is arranged to transmit a rotational movement provided by the motor 11 between the first and second attachment pieces, the torque transmission unit 14 transmitting said rotational movement without transmitting substantial axial or radial loads.

As is shown in exploded view in figure 2 the torque transmission unit 14 comprises an intermediate element 17 arranged between the motor 11 and the casing 20. In the shown embodiment it is arranged between the rotor 12 and the first attachment piece 15. The intermediate element 17 comprises substantially no gap between the rotor 12 and the first attachment piece 15 in a direction of rotation around the axial axis A. On the contrary, the torque transmission unit 14 includes a freedom to move both in a plane X,Y orthogonal to the axial axis A, and in the axial direction along the axial axis A. Hence, substantially no axial or radial forces are transmitted between the rotor 12 and the stator 13. The torque transmission unit 14 may alternatively be arranged between the rotor 12 and the second attachment piece 16, the stator in such an embodiment being connected to the first attachment piece 15 instead of the second attachment piece 16. Further, the torque transmission unit 14 may be arranged to connect the rotation of the stator to one of the attachment pieces, wherein the rotor is connected to the other of the two attachment pieces. Such an embodiment would however demand a specific casing not incorporating the stator.

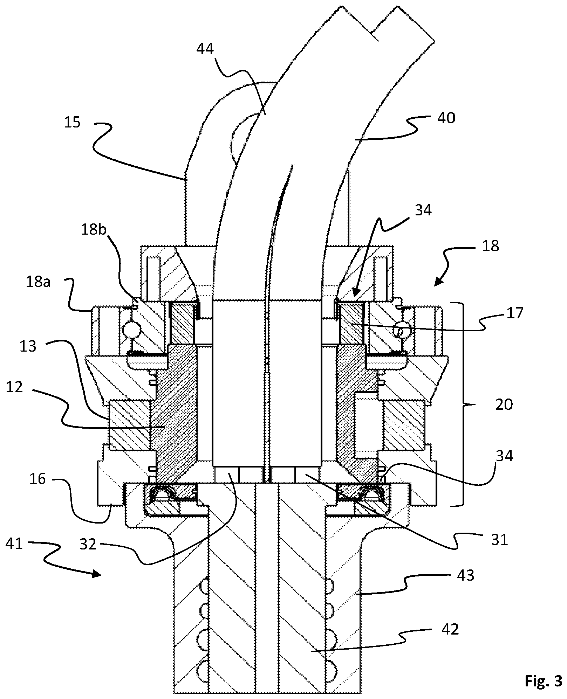

The specific intermediate element 17 of the torque transmission unit 14 of the shown first embodiment comprises a first set of engagement portions 21, in the form of protrusions in the axial direction A with parallel sides, which are to be received in engagement parts 26 in the form of recesses in the rotor attachment piece 15. A second set of engagement portions 22, also in the form of protrusions in the axial direction A with parallel sides, are received in engagement parts 25 in the form of recesses in the rotor 12. The first set of engagement portions 21 are arranged to allow a freedom of movement with respect to said rotor in a first direction X that is orthogonal to the axial axis A and the second set of engagement portions 22 are arranged to allow a freedom of movement with respect to said rotor attachment piece 15 in a second direction Y that is orthogonal to the axial axis A and to said first direction X. The parallel sides of the respective protrusions of the engagement portions 21,22 are arranged to slide within the parallel sides of the respective engaging recess of the engagement parts 25,26. Both sets of engagement portions 21,22 allow a certain freedom of movement in the axial direction A. Typically, the width of the intermediate element 17 is less than the space available provided between rotor 12 and rotor attachment part 15, such that an axial gap 34 is available to provide the certain freedom of movement in the axial direction A, as indicated in fig 3. The sets of engagement portions 21,22 of the intermediate element 17 may extend radially or axially, whatever is most suitable in any specific application.

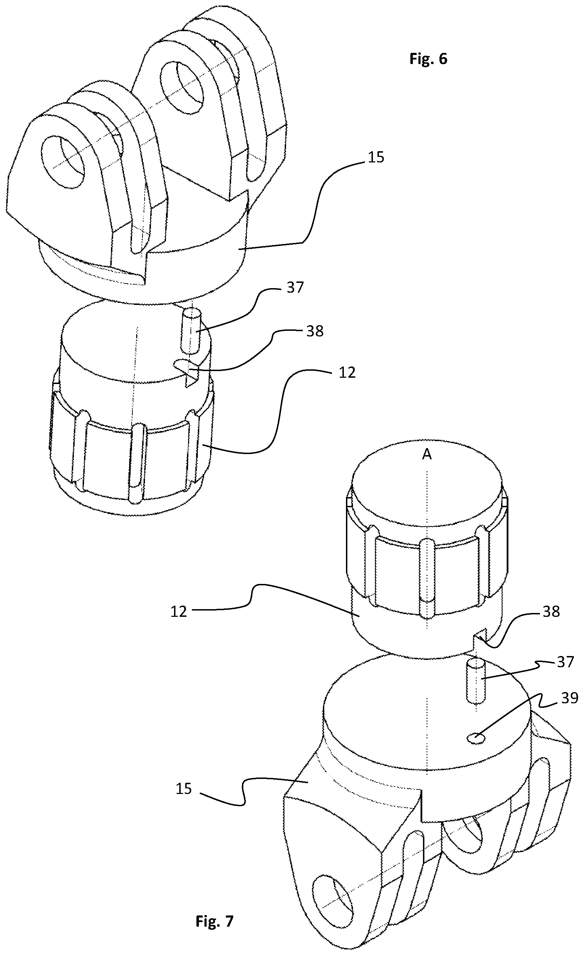

Further, in a simpler embodiment shown in figs. 6 and 7 the torque transmission unit comprises a connective element 37, typically in the form of a dowel pin, that is arranged in a mating track 38 that extends radially and in which connective element 37 may travel in the radial direction. In the embodiment shown in figs. 6 and 7 the connective element 37 is fixed in a bore 39 in the first attachment part 15, which connects to the rotor 12, wherein the rotor comprises a mating track 38 that extends radially, said track 38 having a width that corresponds to the width of the connective element 37 so as to not allow any gap in the rotational direction but to allow a sliding motion in the radial direction. In an alternative embodiment two connective elements are arranged to slide in a track extending from side to side or two corresponding mating tracks extending parallel along the same line on opposite sides of the rotor 12. As an alternative the connective element(s) 37 may be arranged on the rotor and the track(s) 39 may be arranged in the first or second attachment part. Further, the interaction may instead be arranged between the stator and one of the first and second attachment parts.

As is shown in fig. 3 a swivel connector 41 is arranged via which the hydraulic fluid to the hydraulic tool (not shown) is arranged to be provided. The hydraulic tool is arranged to be attached to the second attachment part 16, which in the shown embodiment is arranged between the stator 12 and the the house 43 of the swivel connector 41. The swivel connector 41 is hence arranged to be housed at least partly inside the hydraulic tool (not shown). The house 43 of the swivel connector 41 is arranged to rotate with the stator 13 of the motor, whereas the central portion 42 of the swivel connector 41 is arranged to rotate with the rotor 12.

In the first embodiment the motor 11 is hollow allowing the hydraulic hoses 40 to pass through the interior of both the rotor 12 and stator 13 along the direction of the axial axis A. The hydraulic couplings are provided on a central portion 42 of the swivel connector 41. As mentioned above the central portion 42 of the swivel connector 41 is arranged to rotate with the rotor 12, which is arranged inside the stator 13. A swivel house 43 of the swivel connector 41 is arranged to house the central portion 42 of the swivel connector 41 and is rotationally connected to the stator 13.

As shown in fig. 3 the hydraulic couplings 32 for connection to the hydraulic hoses 44 to provide the hydraulic motor 11 with hydraulic fluid may be arranged next to the hydraulic couplings 31 for the hydraulic tool, hence facing the first attachment piece 15 substantially parallel to the axis of rotation A via or through the rotor 12 of the motor 11. The hydraulic fluid for the motor is passed from the rotor 12, through the swivel connector 41 and back to the stator 13 of the motor 11.

An angle meter 34 is arranged to monitor the rotation of the first attachment piece 15 with respect to the second attachment part 16, e.g. by monitoring the rotation of the rotor 12 with respect to the stator 13 or the housing 20. The angle meter could be located at any location between two pieces of the rotator 10 that rotate with respect to each other when the motor 11 is driven.

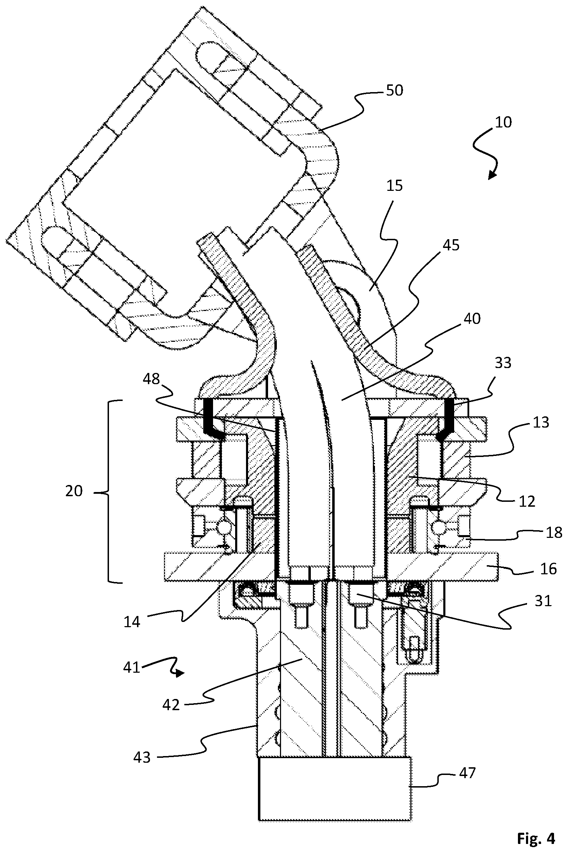

In a second embodiment of the invention shown in fig. 4 the hydraulic couplings 33 to provide the hydraulic motor 11 with hydraulic fluid are arranged separate from the hydraulic couplings 31 to provide the hydraulic tool with hydraulic fluid, at a distance from and/or off-set from the axis of rotation A of the rotor 12. In this embodiment the hydraulic fluid provided via the hydraulic couplings 33 to drive the hydraulic motor 11 does not need to be swiveled. This is due to that the first attachment piece 15, from which the hydraulic hoses to the motor 11 arrives, rotates with the casing 20, such that the hydraulic couplings 33 may be arranged directly in the casing, typically into the stator 13 of the motor.

This is due to that, in this second embodiment, the stator 13 is rotationally connected to the first attachment piece 15, which is arranged to be fastened to a crane arm or the like from which the hydraulic hoses are provided. An end piece 50 of such a crane arm is shown in fig. 4. The rotor 12 is thus arranged to rotate with the second attachment piece 16 and with the house 43 of the swivel connector 41. The central portion 42 of the swivel connector 41 is arranged to rotate with the stator 13. In the shown embodiment a tube 48 is provided to connect a lower portion of the first attachment piece 15 to the central portion 42 of the swivel connector 41.

As for the first embodiment the second attachment piece 16 of the second embodiment is arranged between the motor 11 and the swivel connector 41. The swivel 41 is hence arranged to be housed within the hydraulic tool.

Also visible in fig. 4 is an electric swivel 47 which is arranged in connection to the swivel connector 41 to provide electric power and signals to the tool or control functions arranged in connection thereto. Namely, most hydraulic tools have electrically controlled functions, which needs to be electrically controlled and/or powered, and in order to provide the necessary electricity over the rotating parts without the need of hindering cables the electric power and signals needs to be swiveled. The electric cable(s) is/are preferably arranged alongside the hydraulic couplings facing the first attachment piece 15 and substantially parallel to the axis of rotation A. Hence in accordance with the first and second embodiment of the invention the electric cable(s) is/are arranged through the rotor 12 of the motor 11. Likewise, a conduit for providing urea may be arranged alongside the hydraulic hoses and electric cables. Urea is used in forestry applications and therefore the possibility of providing urea should preferably be available to all rotators. Further, a swivel for Urea is hence also provided in connection to the swivel connector 41.

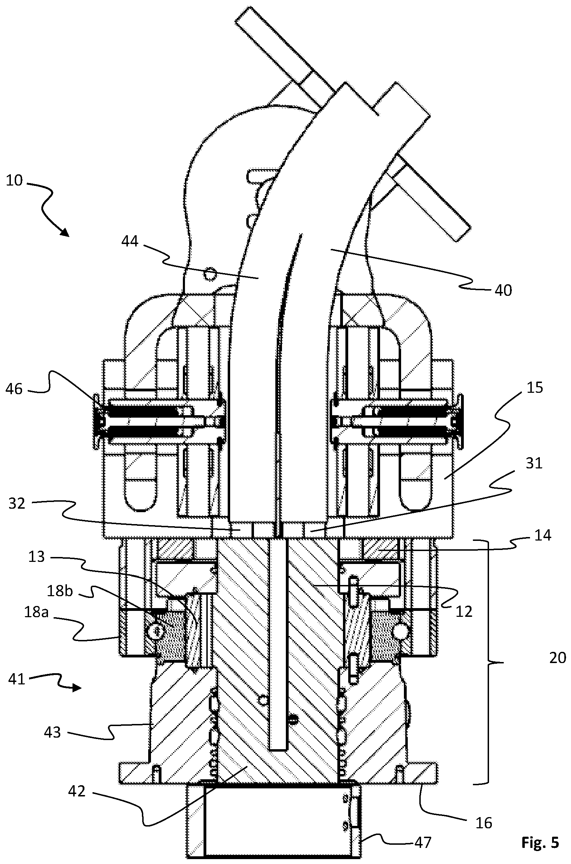

In the third embodiment shown in fig. 5 the rotor 12 and the central portion 42 of the swivel connector 41 are integrated, wherein the hydraulic couplings 31 to provide the hydraulic tool with hydraulic fluid are provided on an axial end of the integrated rotor 12 and said central portion 42 of the swivel connector 41, facing the first attachment portion 15 in order to connect to hydraulic hoses 40 arriving from the crane arm. The hydraulic couplings 32 to connect to the hoses 44 for providing hydraulic fluid to the motor 11 are also provided on an axial end of the integrated rotor 12 and said central portion 42, e.g. alongside the hydraulic couplings 31 for the hydraulic tool. Connections for urea and electrical power and signals are preferably also provided alongside said hydraulic couplings 31,32. An electric swivel 47 is arranged in connection to the swivel connector 41.

In this embodiment the electric swivel 47 is arranged to be housed at least partially inside the hydraulic tool (not shown), whereas the swivel connector 41 is a part of the casing 20. Specifically, the second attachment piece 16 for attaching the hydraulic tool to the rotator 10 is provided as an integrated part of the house 43 of the swivel connector 41.

As is visible in figure 5 the first attachment part 15 is attached to an outer part 18a of the bearing 18, which is arranged to rotate with the rotor 12. The torque transmission unit 14 is however arranged to transmit the rotational movement provided by the motor 11 from the rotor 12 to the first attachment piece 15, the torque transmission unit 14 transmitting said rotational movement without transmitting substantial axial and radial loads. The first attachment piece 15 is hence not rigidly connected to the rotor 12. Instead the first attachment piece 15 and the rotor 12 are rotationally interconnected via the torque transmission unit 14. The inner part 18b of the bearing 18 is rotationally connected to the stator 13 and to the house 43 of the swivel connector 41.

An advantage of the inventive embodiments with respect to prior art rotators is that the hydraulic hoses will not limit the rotation of the motor 11. Further, this may be achieved in a slimmed, non-bulky construction because the couplings are arranged centrally along the axial direction A to or through a rotor that is not carrying loads, which may be accomplished due to the torque transmission unit 14.

As apparent in fig. 5 the rotator arrangement is provided with a brake 46 for limiting a swinging movement of the rotator 10 with respect to the crane arm or the like, on which it is arranged.

Above the invention has been described with reference to specific embodiments. The invention is however no limited to these embodiments. For instance, the invention comprises any feasible combination of the shown embodiments as well as other not shown embodiment with similar functionality. The invention is only limited by the appended claims.

## Claims

1. A rotator arrangement (10) for providing a rotating movement between a crane arm or the like and a hydraulic tool, the rotator arrangement comprising:
- a first attachment piece (15) arranged to be attached to the crane arm or the like,
- a second attachment piece (16) arranged to be attached to the hydraulic tool,
- a casing (20) joining the first attachment piece (15) to the second attachment piece (16), which casing (20) is arranged to carry the loads of the hydraulic tool and includes a bearing (18) or the like allowing a first part of the casing (20) to rotate with respect to a second part of the casing (20), and
- a hydraulic rotation motor (11) arranged to provide a rotational movement between the first and second attachment pieces (15,16) around an axial axis (A), the motor comprising a stator (13) and a rotor (12), the rotor (12) being arranged inside the stator (13) so as to rotate with respect to the stator (13) around the same axial axis (A) as the first and second attachment pieces, **characterised in that** hydraulic couplings (31) for connection to hydraulic hoses (40) arriving from the crane arm or the like to provide the hydraulic tool with hydraulic fluid are arranged facing the first attachment piece (15) and substantially parallel to the axial axis (A) through at least a part of the rotor (12) of the motor (11), the rotor (12) being arranged at least partly inside said casing (20), and wherein the motor (11) is hollow allowing the hydraulic hoses (40) to pass through the interior of both the rotor (12) and stator (13) along the direction of the axial axis (A).

2. The rotator arrangement according to claim 1, wherein a swivel connector (41) is arranged via which the hydraulic fluid to the hydraulic tool is arranged to be provided, the hydraulic couplings being provided on a central portion (42) of the swivel connector (41).

3. The rotator arrangement according to claim 2, wherein the central portion (42) of the swivel connector (41) is arranged to rotate with the rotor (13), which is arranged inside the stator (12) and a swivel house (43) of the swivel connector (41) is arranged to house the central portion (42) of the swivel connector (41) and is rotationally connected to the stator (13).

4. The rotator arrangement according to anyone of claims 1, 2 or 3, wherein hydraulic couplings (32) to provide the hydraulic motor (11) with hydraulic fluid are arranged facing the first attachment piece (15) and substantially parallel to the axis of rotation (A) via or through the rotor (12) of the motor (11).

5. The rotator arrangement according to anyone of claims 1, 2 or 3, wherein hydraulic couplings (33) to provide the hydraulic motor (11) with hydraulic fluid are arranged separated from the hydraulic couplings (31) to provide the hydraulic tool with hydraulic fluid, at a distance from and/or off-set from the axis of rotation (A) of the rotor (12).

6. The rotator arrangement according to claim 5, wherein the hydraulic couplings (33) to provide the hydraulic motor (11) with hydraulic fluid are led directly to the motor (11) and not via a swivel connector.

7. The rotator arrangement according to anyone of the preceding claims, wherein an angle meter (34) is arranged to monitor the rotation of the first attachment piece (15) with respect to the second attachment piece (16).

8. The rotator arrangement according to any one of the preceding claims, wherein a torque transmission unit (14) is arranged to transmit a rotational movement provided by the motor (11) between the first and second attachment pieces (15,16), the torque transmission unit transmitting said rotational movement without transmitting substantial axial and radial loads, and wherein the torque transmission unit (14) comprises a connective element (37) arranged to slide in mating radial track (38) extending in a radial direction orthogonal to the axial axis (A), so as to provide a connection between the motor (11) and one of the attachment pieces (15,16), which connection provides substantially no gap between the motor (11) and said attachment piece (15,16) in a direction of rotation around the axial axis (A), but includes a freedom to move in a radial direction orthogonal to the axial axis (A), and in an axial direction along the axial axis (A).

9. The rotator arrangement (10) according to anyone of the claims 1-7, wherein a torque transmission unit (14) is arranged to transmit a rotational movement provided by the motor (11) between the first and second attachment pieces (15,16), and wherein the torque transmission unit (14) comprises an intermediate element (17) between the rotor and the rotor attachment piece (15), which intermediate element (17) comprises a first set of engagement portions (21) that are arranged with a freedom of movement with respect to said rotor in a first direction (X) that is orthogonal to the axial axis (A), and a second set of engagement portions (22) that are arranged with a freedom of movement with respect to said rotor attachment piece (15) in a second direction (Y) that is orthogonal to the axial axis (A) and to said first direction (X), wherein substantially no gap exists between the first and second set of engagement portions (21,22), respectively and the rotor attachment piece (15,) in a direction of rotation around the axial axis (A).

10. The rotator arrangement (10) according to claim 9, wherein the first set of engagement portions (21) and the second set of engagement portions (22) are arranged with a freedom of movement with respect to said rotor attachment piece (15) in an axial direction along the axial axis (A).

11. The rotator arrangement (10) according to anyone of the preceding claims, wherein the rotator further comprises an electric connection arranged facing the first attachment piece (15) and substantially parallel to the axis of rotation (A) via or through the rotor (12) of the motor (11), and wherein an electric swivel is arranged to provide electric signals and/or power to the hydraulic tool.

12. The rotator arrangement (10) according to anyone of the preceding claims, wherein the rotator further comprises a coupling for urea connection arranged facing the first attachment piece (15) and substantially parallel to the axis of rotation (A) via or through the rotor (12) of the motor (11), and wherein a swivel is arranged to provide urea to the hydraulic tool.

## Patentansprüche

1. Rotatoranordnung (10) zum Bereitstellen einer rotierenden Bewegung zwischen einem Kranarm oder dergleichen und einem hydraulischen Werkzeug, wobei die Rotatoranordnung Folgendes umfasst:
- ein erstes Befestigungsstück (15), dazu angeordnet, an dem Kranarm oder dergleichen befestigt zu werden,
- ein zweites Befestigungsstück (16), dazu angeordnet, an dem hydraulischen Werkzeug befestigt zu werden,
- ein Gehäuse (20), das das erste Befestigungsstück (15) mit dem zweiten Befestigungsstück (16) verbindet, wobei das Gehäuse (20) dazu angeordnet ist, die Lasten des hydraulischen Werkzeugs zu tragen, und ein Lager (18) oder dergleichen umfasst, das einem ersten Teil des Gehäuses (20) ermöglicht, sich bezüglich eines zweiten Teils des Gehäuses (20) zu drehen, und
- einen hydraulischen Rotationsmotor (11), angeordnet zum Bereitstellen einer rotatorischen Bewegung zwischen dem ersten und dem zweiten Befestigungsstück (15,16) um eine axiale Achse (A), wobei der Motor einen Stator (13) und einen Rotor (12) umfasst, wobei der Rotor (12) innerhalb des Stators (13) angeordnet ist, um sich bezüglich des Stators (13) um die gleiche axiale Achse (A) zu drehen wie das erste und das zweite Befestigungsstück,
**dadurch gekennzeichnet, dass** hydraulische Kopplungen (31) zur Verbindung mit Hydraulikschläuchen (40), die von dem Kranarm oder dergleichen kommen zum Bereitstellen von Hydraulikfluid für das hydraulische Werkzeug, so angeordnet sind, dass sie zum ersten Befestigungsstück (15) zeigen und durch zumindest einen Teil des Rotors (12) des Motors (11) im Wesentlichen parallel zur axialen Achse (A) sind, wobei der Rotor (12) zumindest teilweise innerhalb des Gehäuses (20) angeordnet ist, und wobei der Motor (11) hohl ist, was den Hydraulikschläuchen (40) ermöglicht, durch das Innere sowohl des Rotors (12) als auch des Stators (13) entlang der Richtung der axialen Achse (A) zu laufen.

2. Rotatoranordnung nach Anspruch 1, wobei ein Schwenkverbinder (41) angeordnet ist, über den das Hydraulikfluid für das hydraulische Werkzeug bereitgestellt werden kann, wobei die hydraulischen Kopplungen an einem zentralen Teil (42) des Schwenkverbinders (41) bereitgestellt sind.

3. Rotatoranordnung nach Anspruch 2, wobei der zentrale Teil (42) des Schwenkverbinders (41) angeordnet ist, um sich mit dem Rotor (13) zu drehen, der innerhalb des Stators (12) angeordnet ist, und wobei ein Schwenkgehäuse (43) des Schwenkverbinders (41) angeordnet ist, um den zentralen Teil (42) des Schwenkverbinders (41) einzuhausen, und rotatorisch mit dem Stator (13) verbunden ist.

4. Rotatoranordnung nach einem der Ansprüche 1, 2 oder 3, wobei hydraulische Kopplungen (32) zum Bereitstellen von Hydraulikfluid für den hydraulischen Motor (11) so angeordnet sind, dass sie zum ersten Befestigungsstück (15) zeigen und über oder durch den Rotor (12) des Motors (11) im Wesentlichen parallel zur Rotationsachse (A) sind.

5. Rotatoranordnung nach einem der Ansprüche 1, 2 oder 3, wobei hydraulische Kopplungen (33) zum Bereitstellen von Hydraulikfluid für den hydraulischen Motor (11) getrennt von den hydraulischen Kopplungen (31) zum Bereitstellen von Hydraulikfluid für das hydraulische Werkzeug angeordnet sind, bei einem Abstand von und/oder versetzt gegenüber der Rotationsachse (A) des Rotors (12) .

6. Rotatoranordnung nach Anspruch 5, wobei die hydraulischen Kopplungen (33) zum Bereitstellen von Hydraulikfluid für den hydraulischen Motor (11) direkt zum Motor (11) geführt werden und nicht über einen Schwenkverbinder.

7. Rotatoranordnung nach einem der vorhergehenden Ansprüche, wobei ein Winkelmesser (34) angeordnet ist zum Überwachen der Rotation des ersten Befestigungsstücks (15) bezüglich des zweiten Befestigungsstücks (16).

8. Rotatoranordnung nach einem der vorhergehenden Ansprüche, wobei eine Drehmomentübertragungseinheit (14) angeordnet ist zum Übertragen einer durch den Motor (11) bereitgestellten rotatorischen Bewegung zwischen dem ersten und dem zweiten Befestigungsstück (15, 16), wobei die Drehmomentübertragungseinheit die rotatorische Bewegung überträgt, ohne substanzielle axiale und radiale Lasten zu übertragen, und wobei die Drehmomentübertragungseinheit (14) ein Verbindungselement (37) umfasst, das angeordnet ist, um in einer passenden radialen Schiene (38) zu gleiten, die sich in einer radialen Richtung orthogonal zur axialen Achse (A) erstreckt, um eine Verbindung zwischen dem Motor (11) und einem der Befestigungsstücke (15, 16) bereitzustellen, wobei die Verbindung im Wesentlichen keine Lücke zwischen dem Motor (11) und dem Befestigungsstück (15, 16) in einer Richtung von Rotation um die axiale Achse (A) bereitstellt, aber eine Freiheit zum Bewegen in einer radialen Richtung orthogonal zur axialen Achse (A) und in einer axialen Richtung entlang der axialen Achse (A) umfasst.

9. Rotatoranordnung (10) nach einem der Ansprüche 1-7, wobei eine Drehmomentübertragungseinheit (14) angeordnet ist zum Übertragen einer durch den Motor (11) bereitgestellten rotatorischen Bewegung zwischen dem ersten und dem zweiten Befestigungsstück (15, 16), und wobei die Drehmomentübertragungseinheit (14) ein Zwischenelement (17) zwischen dem Rotor und dem Rotorbefestigungsstück (15) umfasst, wobei das Zwischenelement (17) eine erste Menge von Eingriffsabschnitten (21), die mit einer Freiheit von Bewegung bezüglich des Rotors in einer ersten Richtung (X), die orthogonal zur axialen Achse (A) ist, angeordnet sind, und eine zweite Menge von Eingriffsabschnitten (22), die mit einer Freiheit von Bewegung bezüglich des Rotorbefestigungsstücks (15) in einer zweiten Richtung (Y), die orthogonal zur axialen Achse (A) und zur ersten Richtung (X) ist, angeordnet sind, umfasst, wobei im Wesentlichen keine Lücke zwischen der ersten bzw. der zweiten Menge von Eingriffsabschnitten (21, 22) und dem Rotorbefestigungsstück (15) in einer Richtung von Rotation um die axiale Achse (A) vorhanden ist.

10. Rotatoranordnung (10) nach Anspruch 9, wobei die erste Menge von Eingriffsabschnitten (21) und die zweite Menge von Eingriffsabschnitten (22) mit einer Freiheit von Bewegung bezüglich des Rotorbefestigungsstücks (15) in einer axialen Richtung entlang der axialen Achse (A) angeordnet sind.

11. Rotatoranordnung (10) nach einem der vorhergehenden Ansprüche, wobei der Rotator ferner eine elektrische Verbindung umfasst, die so angeordnet ist, dass sie zum ersten Befestigungsstück (15) zeigt und über oder durch den Rotor (12) des Motors (11) im Wesentlichen parallel zur Rotationsachse (A) ist, und wobei eine elektrische Schwenkvorrichtung angeordnet ist zum Bereitstellen elektrischer Signale und/oder Antreiben des hydraulischen Werkzeugs.

12. Rotatoranordnung (10) nach einem der vorhergehenden Ansprüche, wobei der Rotator ferner eine Kopplung für eine Harnstoffverbindung umfasst, die so angeordnet ist, dass sie zum ersten Befestigungsstück (15) zeigt und über oder durch den Rotor (12) des Motors (11) im Wesentlichen parallel zur Rotationsachse (A) ist, und wobei eine Schwenkvorrichtung angeordnet ist zum Bereitstellen von Harnstoff für das hydraulische Werkzeug.

## Revendications

1. Agencement de rotateur (10) pour fournir un mouvement de rotation entre un bras de grue ou similaire et un outil hydraulique, l'agencement de rotateur comprenant :
- une première pièce de fixation (15) conçue pour être fixée au bras de grue ou similaire,
- une seconde pièce de fixation (16) conçue pour être fixée à l'outil hydraulique,
- un boîtier (20) reliant la première pièce de fixation (15) à la seconde pièce de fixation (16), lequel boîtier (20) est disposé pour porter les charges de l'outil hydraulique et comprend un palier (18) ou similaire permettant à une première partie du boîtier (20) de tourner par rapport à une seconde partie du boîtier (20), et
- un moteur de rotation hydraulique (11) conçu pour fournir un mouvement de rotation entre les première et seconde pièces de fixation (15, 16) autour d'un axe axial (A), le moteur comprenant un stator (13) et un rotor (12), le rotor (12) étant disposé à l'intérieur du stator (13) de manière à tourner par rapport au stator (13) autour du même axe axial (A) que les première et seconde pièces de fixation, **caractérisé en ce que** des accouplements hydrauliques (31) pour la connexion à des tuyaux hydrauliques (40) provenant du bras de grue ou similaire pour fournir à l'outil hydraulique un fluide hydraulique sont disposés en face de la première pièce de fixation (15) et sensiblement parallèles à l'axe axial (A) à travers au moins une partie du rotor (12) du moteur (11), le rotor (12) étant disposé au moins en partie à l'intérieur dudit boîtier (20), et dans lequel le moteur (11) est creux, ce qui permet aux tuyaux hydrauliques (40) de traverser l'intérieur du rotor (12) et du stator (13) le long de la direction de l'axe axial (A).

2. Agencement de rotateur selon la revendication 1, dans lequel un raccord pivotant (41) est prévu pour acheminer le fluide hydraulique vers l'outil hydraulique, les accouplements hydrauliques étant prévus sur une partie centrale (42) du raccord pivotant (41).

3. Agencement de rotateur selon la revendication 2, dans lequel la partie centrale (42) du raccord pivotant (41) est conçue pour tourner avec le rotor (13), qui est disposé à l'intérieur du stator (12), et un logement pivotant (43) du raccord pivotant (41) est conçu pour loger la partie centrale (42) du raccord pivotant (41) et est relié de manière rotative au stator (13).

4. Agencement de rotateur selon l'une quelconque des revendications 1, 2 ou 3, dans lequel les accouplements hydrauliques (32) pour fournir au moteur hydraulique (11) un fluide hydraulique sont disposés en face de la première pièce de fixation (15) et sensiblement parallèles à l'axe de rotation (A) par l'intermédiaire ou à travers le rotor (12) du moteur (11).

5. Agencement de rotateur selon l'une quelconque des revendications 1, 2 ou 3, dans lequel les accouplements hydrauliques (33) pour fournir au moteur hydraulique (11) un fluide hydraulique sont disposés séparément des accouplements hydrauliques (31) pour fournir à l'outil hydraulique un fluide hydraulique, à une certaine distance de l'axe de rotation (A) du rotor (12) et/ou décalés par rapport à celui-ci.

6. Agencement de rotateur selon la revendication 5, dans lequel les accouplements hydrauliques (33) pour fournir au moteur hydraulique (11) un fluide hydraulique sont conduits directement au moteur (11) et non par l'intermédiaire d'un raccord pivotant.

7. Agencement de rotateur selon l'une quelconque des revendications précédentes, dans lequel un dispositif de mesure d'angle (34) est disposé pour surveiller la rotation de la première pièce de fixation (15) par rapport à la seconde pièce de fixation (16).

8. Agencement de rotateur selon l'une quelconque des revendications précédentes, dans lequel une unité de transmission de couple (14) est disposée pour transmettre un mouvement de rotation fourni par le moteur (11) entre les première et seconde pièces de fixation (15, 16), l'unité de transmission de couple transmettant ledit mouvement de rotation sans transmettre de charges axiales et radiales substantielles, et dans lequel l'unité de transmission de couple (14) comprend un élément de liaison (37) disposé pour glisser dans une piste radiale correspondante (38) s'étendant dans une direction radiale orthogonale à l'axe axial (A), de manière à fournir une liaison entre le moteur (11) et l'une des pièces de fixation (15, 16), laquelle liaison n'offre pratiquement aucun espace entre le moteur (11) et ladite pièce de fixation (15, 16) dans une direction de rotation autour de l'axe axial (A), mais comprend une liberté de mouvement dans une direction radiale orthogonale à l'axe axial (A), et dans une direction axiale le long de l'axe axial (A).

9. Agencement de rotateur (10) selon l'une quelconque des revendications 1 à 7, dans lequel une unité de transmission de couple (14) est disposée pour transmettre un mouvement de rotation fourni par le moteur (11) entre les première et seconde pièces de fixation (15, 16), et dans lequel l'unité de transmission de couple (14) comprend un élément intermédiaire (17) entre le rotor et la pièce de fixation du rotor (15), lequel élément intermédiaire (17) comprend un premier ensemble de parties d'engagement (21) qui sont disposées avec une liberté de mouvement par rapport audit rotor dans une première direction (X) qui est orthogonale à l'axe axial (A), et un second ensemble de parties d'engagement (22) qui sont disposées avec une liberté de mouvement par rapport à ladite pièce de fixation du rotor (15) dans une seconde direction (Y) qui est orthogonale à l'axe axial (A) et à ladite première direction (X), dans lequel il n'y a sensiblement pas d'espace entre les premier et second ensembles de parties d'engagement (21, 22), respectivement et la pièce de fixation du rotor (15) dans une direction de rotation autour de l'axe axial (A).

10. Agencement de rotateur (10) selon la revendication 9, dans lequel le premier ensemble de parties d'engagement (21) et le second ensemble de parties d'engagement (22) sont disposés avec une liberté de mouvement par rapport à ladite pièce de fixation du rotor (15) dans une direction axiale le long de l'axe axial (A) .

11. Agencement de rotateur (10) selon l'une quelconque des revendications précédentes, dans lequel le rotateur comprend en outre une connexion électrique disposée en face de la première pièce de fixation (15) et sensiblement parallèle à l'axe de rotation (A) par l'intermédiaire ou à travers le rotor (12) du moteur (11), et dans lequel un pivot électrique est disposé pour fournir des signaux électriques et/ou de l'énergie à l'outil hydraulique.

12. Agencement de rotateur (10) selon l'une quelconque des revendications précédentes, dans lequel le rotateur comprend en outre un raccord pour la connexion d'urée disposé en face de la première pièce de fixation (15) et sensiblement parallèle à l'axe de rotation (A) par l'intermédiaire ou à travers le rotor (12) du moteur (11), et dans lequel un pivot est disposé pour fournir de l'urée à l'outil hydraulique.
